# EUROPÄISCHE PATENTSCHRIFT

(11) **EP 2 298 073 B1**
(45) Veröffentlichungstag und Bekanntmachung des Hinweises auf die Patenterteilung: **30.01.2013**
(21) Anmeldenummer: 10174736.8
(22) Anmeldetag: 25.11.2002
(51) Int. Cl.: A01N 41/10, A01N 33/18, A01P 13/02

(54) **Synergistische herbizide Mittel**
Synergic herbicide agent
Produit herbicide synergique

(30) Priorität: 07.12.2001 DE 10160139
(43) Veröffentlichungstag der Anmeldung: 23.03.2011
(62) Teilanmeldung aus: 09012741.6
(73) Patentinhaber: Bayer CropScience Aktiengesellschaft, 40789 Monheim (DE)
(72) Erfinder: Hacker, Erwin, 65239, Hochheim (DE); Bieringer, Hermann, 65817, Eppstein (DE); Krähmer, Hansjörg, 65719, Hofheim (DE)

(56) Entgegenhaltungen:
- EP-A1- 0 006 681
- WO-A-01/28341
- WO-A1-96/15673
- GB-A- 2 126 897
- GB-A- 2 290 966

## Beschreibung

Die Erfindung betrifft das technische Gebiet der Pflanzenschutzmittel, die gegen unerwünschten Pflanzenwuchs eingesetzt werden können und als Wirkstoffe eine Kombination von mindestens zwei Herbiziden enthalten.

Spezieller betrifft sie herbizide Mittel, welche als Wirkstoff ein Herbizid aus der Gruppe der Benzoylcyclohexandione in Kombination mit mindestens einem weiteren Herbizid enthalten.

Herbizide aus der oben genannten Gruppe der Benzoylcyclohexandione sind aus zahlreichen Dokumenten bekannt. So werden beispielsweise in WO 98/29406 und WO 00/21924 Benzoylcyclohexandione mit herbizider Wirkung beschrieben.

Die Anwendung der aus diesen Schriften bekannten Benzoylcyclohexandione ist jedoch in der Praxis häufig mit Nachteilen verbunden. So ist die herbizide Wirksamkeit der bekannten Verbindungen nicht immer ausreichend, oder bei ausreichender herbizider Wirksamkeit werden unerwünschte Schädigungen der Nutzpflanzen beobachtet.

Die Wirksamkeit von Herbiziden hängt unter anderem von der Art des eingesetzten Herbizids, dessen Aufwandmenge, der Zubereitung, den jeweils zu bekämpfenden Schadpflanzen, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen gegenüber einem Wirkstoff, die bei längerer Anwendung oder geographisch begrenzt auftreten können. Solche Veränderungen äußern sich als mehr oder weniger starke Wirkungsverluste und lassen sich nur bedingt durch höhere Aufwandmengen der Herbizide ausgleichen.

Wegen der Vielzahl möglicher Einflußfaktoren gibt es praktisch keinen einzelnen Wirkstoff, der die gewünschten Eigenschaften für unterschiedliche Anforderungen, insbesondere hinsichtlich der Schadpflanzenspezies und der Klimazonen, in sich vereinigt. Dazu kommt die ständige Aufgabe, die Wirkung mit immer geringerer Aufwandmenge an Herbiziden zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine häufig angewandte Methode zur Verbesserung des Anwendungsprofils eines Herbizids besteht in der Kombination des Wirkstoffs mit einem oder mehreren anderen Wirkstoffen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer gemeinsamen Formulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Aus WO 01/28341 sind Kombinationen von Herbiziden aus der Gruppe der Hemmstoffe der Hydroxyphenylpyruvat-Dioxygenase mit zahlreichen weiteren Herbiziden anderer Stoff- und Wirkgruppen bekannt. WO 96/15673 A1 beschreibt Mischungen von Pendimethalin und HPPD-Inhibitoren aus der Gruppe der Benzoylisoxazole, wie Isoxaflutole.

Aufgabe der vorliegenden Erfindung ist die Bereitstellung von weiteren herbiziden Mitteln mit synergistisch versfärkter wirkung.

Ein Gegenstand der Erfindung sind herbizide Mittel, gekennzeichnet durch einen wirksamen Gehalt an
A) der Verbindung 2-[2-Chlor-3-(2,2,2-trifluorethoxymethyl)-4-methylsulfonyl-benzoyl]cyclohexan-1,3-dion (Tembotrione), sowie deren landwirtschaftlich üblichen Salze (Komponente A)
   und
B) Pendimethalin (Komponente B),
wobei diese Mittel die Komponente A oder deren Salze und die Verbindung der Gruppe B (Komponente B) in einem Gewichtsverhältnis von 1:2000 bis 2000:1 enthalten.

2-[2-Chlor-3-(2,2,2-trifluorethoxymethyl)-4-methylsulfonyl-benzoyl]cyclohexan-1,3-dion (Komponente A) ist aus WO 00/21924 bekannt. Pendimethalin ist z.B. aus "The Pesticide Manual" 12. Auflage, 2000, British Crop Protection Council, bekannt.

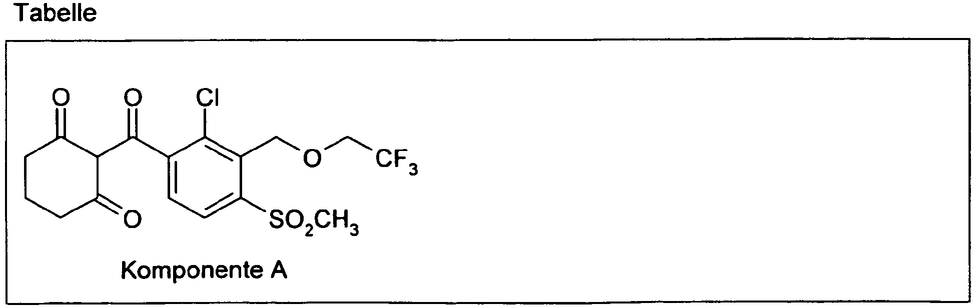

In den erfindungsgernäßen Kombinationen benötigt man in der Regel Aufwandmengen im Bereich von 1 bis 2000 g, vorzugsweise 10 bis 500 g Aktivsubstanz pro Hektar (ai/ha) der Komponente A und 1 bis 2000 g, vorzugsweise 1 bis 500 g der Komponente B.

Die Gewichtsverhältnisse der einzusetzenden Komponenten A zu B können in weiten Bereichen variiert werden. Vorzugsweise ist das Mengenverhältnis im Bereich von 1:50 bis 500:1, insbesondere im Bereich von 1:20 bis 50:1. Optimale Gewichtsverhältnisse können vom jeweiligen Applikationsgebiet, Unkrautspektrum und der eingesetzten Wirkstoffkombination abhängen und in Vorversuchen bestimmt werden.

Die erfindungsgemäßen Mittel lassen sich zur selektiven Bekämpfung von annuellen und perennierenden monokotylen und dikotylen Schadpflanzen in Getreide-(beispielsweise Gerste, Hafer, Roggen, Weizen), Mais- und Reiskulturen sowie in transgenen Nutzpflanzenkulturen oder auf klassischem Wege selektierten Nutzpflanzenkulturen, die gegen die Wirkstoffe A und B resistent sind, einsetzen. Ebenso sind sie zur Bekämpfung unerwünschter Schadpflanzen einsetzbar in Plantagenkulturen wie Ölpalme, Kokospalme, Gummibaum, Zitrus, Ananas, Baumwolle, Kaffee, Kakao, Zuckerrohr u.a. sowie im Obst- und Weinbau. Sie sind besonders gut für die Bekämpfung von mono- und/oder dikotylen Schadpflanzen in Mais und Zuckerrohr geeignet.

Die erfindungsgemäßen Mittel erfassen ein breites Unkrautspektrum. Sie eignen sich beispielsweise zur Bekämpfung von annuellen und perennierenden Schadpflanzen wie beispielsweise aus den Spezies Abutilon, Alopecurus, Avena, Chenopodium, Cynoden, Cyperus, Digitaria, Echinochloa, Elymus, Galium, lpomoea, Lamium, Matricaria, Scirpus, Setaria, Sorghum, Veronica, Viola und Xanthium.

Die erfindungsgemäßen herbiziden Mittel zeichnen sich auch dadurch aus, daß die in den Kombinationen verwendeten und wirksamen Dosierungen der Komponenten A und B gegenüber einer Einzeldosierung verringert ist, so daß eine Reduzierung der nötigen Aufwandmengen der Wirkstoffe ermöglicht wird.

Gegenstand der Erfindung ist auch ein Verfahren zur Bekämpfung von unerwünschtem Pflanzenwuchs, **dadurch gekennzeichnet**, daß man Herbizid A mit Herbizide B auf die Schadpflanzen, Pflanzenteile davon oder die Anbaufläche appliziert.

Bei der gemeinsamen Anwendung von Herbiziden des Typs A und B treten überadditive (= synergistische) Effekte auf. Dabei ist die Wirkung in den Kombinationen stärker als die zu erwartende Summe der Wirkungen der eingesetzten Einzelherbizide und der Wirkung des jeweiligen einzelnen Herbizids A und B. Die synergistischen Effekte erlauben eine Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Diese Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Die erfindungsgemäßen Wirkstoffkombinationen können sowohl als Mischformulierungen der Komponenten A und B, gegebenenfalls mit weiteren üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Komponenten A und B können auf verschiedene Arten formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London. Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Die erfindungsgemäßen Kombinationen der Komponente A und B verursachen bei ihrer Anwendung oftmals keine oder geringe Schäden an Nutzpflanzen. Um die Schäden an Nutzpflanzen auf ein tolerables Minimum zu senken oder gänzlich zu eliminieren können die erfindungsgemäßen Kombinationen der Komponente A und B auch in einer weiteren bevorzugten Ausführungsform in Mischung mit einem Safener der Formel (I) oder (II) 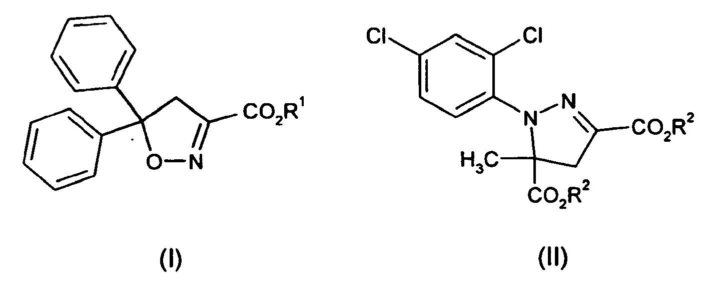 angewendet werden, worin R¹ für Wasserstoff, Methyl oder Ethyl steht, und R² Methyl oder Ethyl bedeutet. Die Verbindungen der Formel (1) sind aus WO 95/07897 und dort zitierter Literatur bekannt und können nach oder analog den dort beschriebenen Verfahren hergestellt werden. Die Verbindungen der Formel (II) sind aus EP-A 0 635 996 und dort zitierter Literatur bekannt und können nach oder analog den dort beschriebenen Verfahren hergestellt werden. Die beiden zitierten Schriften enthalten ausführliche Angaben zu Herstellungsverfahren und Ausgangsmaterialien. Auf diese Schriften wird ausdrücklich Bezug genommen, sie gelten durch Zitat als Bestandteil dieser Beschreibung.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden:
Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, Wirkstoffe der Typen A und B, wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%. Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb-und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Komponenten A und B hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

### A. Formulierungsbeispiele

a) Ein Stäubemittel (WP) wird erhalten, indem man 10 Gew.-Teile eines Wirkstoffs/Wirksstoffgemischs und 90 Gew.-Teile Talkum als Inertstoff mischt und in einer Schlagmühle zerkleinert.
b) Ein in Wasser leicht dispergierbares, benetzbares Pulver (WG) wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (Triton X 207), 3 Gew.-Teilen Isotridecanolpolyglykolether (8 EO) und 71 Gew.-Teilen paraffinischem Mineralöl (Siedebereich z.B. ca. 255 bis 277° C) mischt und in einer Reibkugelmühle auf eine Feinheit von unter 5 Mikron vermahlt.
d) Ein emulgierbares Konzentrat (EC) wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.
e) Ein in Wasser dispergierbares Granulat wird erhalten indem man 75 Gew.-Teile eines Wirkstoffs/Wirksstoffgemischs,
   10 Gew.-Teile ligninsulfonsaures Calcium,
   5 Gew.-Teile Natriumlaurylsulfat, 3 Gew.-Teile Polyvinylalkohol und
   7 Gew.-Teile Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   25 Gew.-Teile eines Wirkstoffs/Wirksstoffgemischs,
   5 Gew.-Teile 2,2'-dinaphthylmethan-6,6'-disulfonsaures Natrium,
   2 Gew.-Teile oleoylmethyltaurinsaures Natrium,
   1 Gew.-Teil Polyvinylalkohol,
   17 Gew.-Teile Calciumcarbonat und
   50 Gew.-Teile Wasser
auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

## Patentansprüche

1. Herbizide Mittel, **gekennzeichnet durch** einen wirksamen Gehalt an
A) der Verbindung 2-[2-Chlor-3-(2,2,2-trifluorethoxymethyl)-4-methylsulfonyl-benzoyl]cyclohexan-1,3-dion (Tembotrione), sowie deren landwirtschaftlich üblichen Salze (Komponente A)
und
B) Pendimethalin (Komponente B),
wobei diese Mittel die Komponente A oder deren Salze und die Verbindung der Gruppe B (Komponente B) in einem Gewichtsverhältnis von 1:2000 bis 2000:1 enthalten.

2. Herbizide Mittel nach Anspruch 1, **dadurch gekennzeichnet, daß** das Gewichtsverhältnis A:B der Komponenten A und B im Bereich von 1:20 bis 50:1 liegt.

3. Herbizide Mittel nach Anspruch 1 oder 2 , **dadurch gekennzeichnet, daß** sie 0,1-99 Gew.-% Komponenten A und B sowie 99 bis 0,1 Gew.-% im Pflanzenschutz übliche Formulierungsmittel enthalten.

4. Herbizide Mittel nach einem der Ansprüche 1 bis 3, **dadurch gekennzeichnet, daß** sie eine Verbindung der Formel (I) oder (II) enthalten, 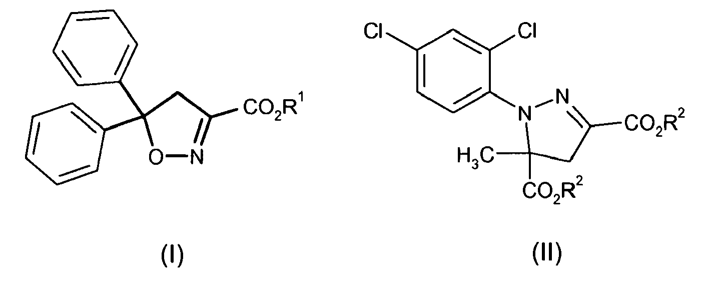 worin R¹ für Wasserstoff , Methyl oder Ethyl steht, und R² Methyl oder Ethyl bedeutet.

5. Verfahren zur Bekämpfung von unerwünschtem Pflanzenwuchs, **dadurch gekennzeichnet, daß** man Komponente A mit Komponente B auf die Schadpflanzen, Pflanzenteile davon oder die Anbaufläche appliziert, wobei die Kombination der Komponenten A und B wie in einem der Ansprüche 1 bis 4 definiert ist.

6. Verwendung einer Kombination aus Komponenten A und B als herbizides Mittel zur Bekämpfung von unerwünschtem Pflanzenwuchs, wobei die Kombination der Komponenten A und B wie in einem der Ansprüche 1 bis 4 definiert ist.

## Claims

1. A herbicidal composition, comprising an effective amount of
A) the compound 2-[2-chloro-3-(2,2,2-trifluoroethoxymethyl)-4-methylsulfonyl-benzoyl]cyclohexane-1,3-dione (tembotrione) or an agriculturally suitable salt thereof (component A)
and
B) fluthiacet-methyl (component B)
where this composition comprises component A or a salt thereof and the compound of group B (component B) in a weight ratio of from 1:2000 to 2000:1.

2. The herbicidal composition as claimed in claim 1, wherein the weight ratio A:B of components A and B is in the range from 1:20 to 50:1.

3. The herbicidal composition as claimed in claim 1 or 2, which comprises 0.1-99% by weight of components A and B and 99 to 0.1% by weight of formulating agents customary in crop protection.

4. The herbicidal composition as claimed in any of claims 1 to 3, which comprises a compound of the formula (I) or (II) 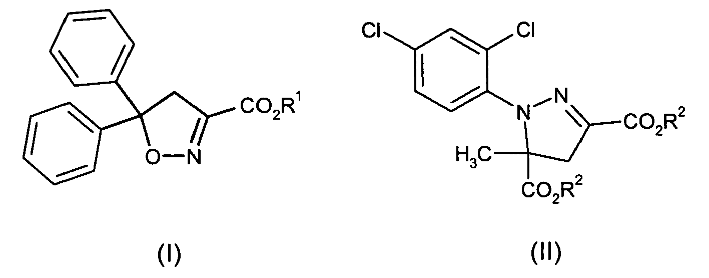 where R¹ is hydrogen, methyl or ethyl and R² is methyl or ethyl.

5. A method for controlling unwanted vegetation, which comprises applying component A and component B to the harmful plants, to parts of harmful plants or to the area under cultivation, the combination of components A and B being as defined in any of claims 1 to 4.

6. The use of a combination of components A and B as a herbicidal composition for controlling unwanted vegetation, the combination of components A and B being as defined in any of claims 1 to 4.

## Revendications

1. Agents herbicides, **caractérisés par** une teneur efficace en
A) le composé 2-[2-chloro-3-(2,2,2-trifluoroéthoxy-méthyl)-4-méthylsulfonyl-benzoyl]cyclohexane-1,3-dione (tembotrione) ainsi que ses sels usuels en agriculture (composant A)
et
B) le fluthiacet-méthyle (composant B)
ces agents contenant le composé A ou ses sels et le composé du groupe B (composant B) en un rapport pondéral de 1:2000 à 2000:1.

2. Agents herbicides selon la revendication 1, **caractérisés en ce que** le rapport pondéral A:B des composants A et B se situe dans la plage allant de 1:20 à 50:1.

3. Agents herbicides selon la revendication 1 ou 2, **caractérisés en ce qu'**ils contiennent 0,1-99 % en poids de composants A et B ainsi que 99 à 0,1 % en poids d'agents de formulation usuels dans la protection des plantes.

4. Agents herbicides selon l'une quelconque des revendications 1 à 3, **caractérisés en ce qu'**ils contiennent un composé de formule (I) ou (II) 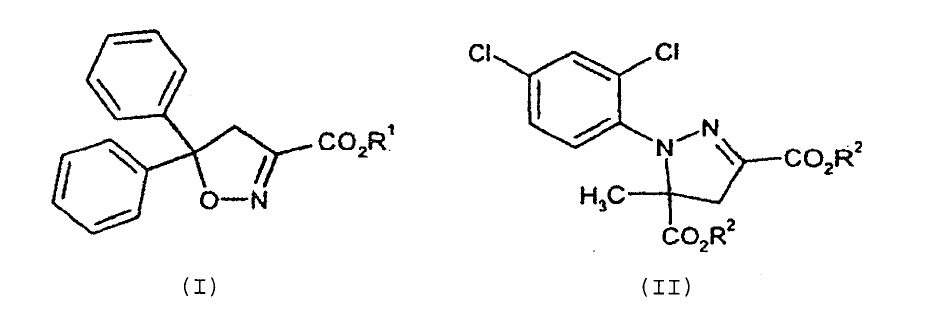 où R¹ représente un atome d'hydrogène, le groupe méthyle ou éthyle, et R² représente le groupe méthyle ou éthyle.

5. Procédé pour la lutte contre la croissance indésirable de plantes, **caractérisé en ce qu'**on applique le composant A avec le composant B sur les plantes nuisibles, des parties de ces plantes ou l'aire de culture, l'association des composants A et B étant telle que définie dans l'une quelconque des revendications 1 à 4.

6. Utilisation d'une association de composants A et B en tant qu'agent herbicide pour la lutte contre la croissance indésirable de plantes, l'association des composants A et B étant telle que définie dans l'une quelconque des revendications 1 à 4.
